# EUROPÄISCHE PATENTSCHRIFT

(11) **EP 2 003 043 B1**
(45) Veröffentlichungstag und Bekanntmachung des Hinweises auf die Patenterteilung: **09.09.2009**
(21) Anmeldenummer: 08104264.0
(22) Anmeldetag: 05.06.2008
(51) Int. Cl.: B62D 55/065, B62D 55/14

(54) **Antriebseinheit für ein Inspektionsfahrzeug sowie Inspektionsfahrzeug mit einer solchen Antriebseinheit**
Drive unit for an inspection vehicle and inspection vehicle with such a drive unit
Unité d'entraînement pour un véhicule d'inspection et véhicule d'inspection avec une telle unité d'entraînement

(30) Priorität: 14.06.2007 CH 9492007
(43) Veröffentlichungstag der Anmeldung: 17.12.2008
(73) Patentinhaber: Alstom Technology Ltd, 5400 Baden (CH)
(72) Erfinder: Moser, Roland, 8805, Zürich (CH); Mark, Bernhard, 79761, Waldshut-Tiengen (DE); Kaufmann, Reto, 5400, Baden (CH); Erni, Josef, 8400, Winterthur (CH)

(56) Entgegenhaltungen:
- EP-A- 1 772 949
- DE-A1- 2 023 683
- GB-A- 989 742
- JP-A- 7 323 701
- JP-A- 10 016 504
- JP-A- 60 001 083

## Beschreibung

### TECHNISCHES GEBIET

Die vorliegende Erfindung bezieht sich auf das Gebiet der Wartung und Überprüfung von technischen Anlagen, insbesondere in Kraftwerken. Sie betrifft eine Antriebseinheit für ein Inspektionsfahrzeug gemäss dem Oberbegriff des Anspruchs 1 sowie ein Inspektionsfahrzeug mit einer solchen Antriebseinheit.

### STAND DER TECHNIK

Einrichtungen von Kraftwerken wie z.B. Generatoren, Kessel oder dgl., müssen im Rahmen der Wartung auf ihren Zustand hin inspiziert und getestet werden, um mögliche Schwachstellen oder Fehler zu entdecken und ggf. zu beheben. Eine solche Inspektion erfordert häufig den Zugang zu abgeschlossenen oder unzugänglichen Bereichen und wiederholte Messgänge entlang der zu überprüfenden Struktur. Ein Beispiel für derartige Inspektionen ist die Überprüfung an der Innenseite des Rotors eines Generators. Hierfür wird ein Robotersystem benötigt, das klein genug ist, um in die entsprechenden Bereiche zu gelangen, und das definierte Messstrecken abfahren kann.

Aus der US-A-5,650,579 ist eine Überwachungsraupe für die Inspektion von Generatoren bekannt, die im Luftspalt zwischen Rotor und Stator eingesetzt werden kann. Die Überwachungsraupe umfasst drei mit angetriebenen Raupenketten ausgestattete Antriebseinheiten, die quer zur Fahrtrichtung relativ zueinander spreizend verfahren werden können, um das Fahrzeug im Luftspalt zu fixieren. Der Einsatz dieser Vorrichtung ist jedoch auf Luftspalte von Generatoren beschränkt.

In EP 1 772 949 A1 ist eine Miniatur-Überwachungsraupe für die Inspektion von Generatoren beschrieben, welche im Luftspalt zwischen Rotor und Stator arbeitet. Diese Überwachungsraupe besteht aus einem zentralen Grundelement (Basis), einem linearen und einem umlaufenden Fahrmechanismus, welche wechselweise in Betrieb gesetzt werden, und einem Ultraschall-Inspektionsmodul, der mit dem Grundelement verbunden ist. Im Grundelement sind mehrere Magnete, vorzugsweise Permanentmagnete angeordnet, welche die Raupe in Kontakt zum Generatorfeld halten. Bei der Inspektion unebener Oberflächen ist diese Anordnung der Magnete aber nachteilig, da aufgrund der Unebenheiten die magnetische Anziehung zum Teil verringert ist und somit keine genügende Haftung der Überwachungsraupe an der abzufahrenden Oberfläche gewährleistet ist.

Aus der US-A-5,252,927 ist eine Vorrichtung zur Überwachung von Glimmentladungen in dynamoelektrischen Maschinen bekannt, bei der ein mit eigenen Antriebseinheiten ausgestattetes Fahrzeug eingesetzt wird. Die eigentliche Überwachungseinrichtung ist zwischen zwei mit Raupenketten versehenen Antriebseinheiten angeordnet, die jeweils einen motorischen Antrieb haben. An den beiden Enden der Antriebseinheiten sind jeweils Permanentmagneten fest angeordnet, die mit dem Eisen des Stator-Blechpakets wechselwirken und die Vorrichtung an die abzufahren Oberfläche drücken. Nachteilig bei dieser bekannten Vorrichtung ist, dass auf unebenen Oberflächen die Permanentmagnete ihre anziehende Wirkung teilweise einbüssen können und die Vorrichtung dann (insbesondere im Über-Kopf-Betrieb) herunterfallen kann. Bekannte Generator-Statore sind beispielsweise mit einem Harz versiegelt, das zur Tropfenbildung an den Kanten des Stator-Blechpakets neigt. Derartige ausgehärtete Tropfen, die etwa 5 mm hoch sind, können für eine solche bekannte Vorrichtung mit magnetischer Haftung ein unüberwindbares Hindernis darstellen. Nachteilig in der Praxis ist aber auch, dass in jeder der Antriebseinheiten zwei parallele Raupenketten eingesetzt werden, zwischen denen die Permanentmagnete angeordnet sind. Es sind daher vor allem die Antriebseinheiten, die bei der bekannten Vorrichtung Probleme bereiten.

### DARSTELLUNG DER ERFINDUNG

Es ist Aufgabe der Erfindung, eine Antriebseinheit für ein Inspektionsfahrzeug, insbesondere für den Kraftwerksbereich, zu schaffen, welche die Nachteile bekannter Antriebseinheiten vermeidet und sich insbesondere durch eine sichere Haftung an der zu inspizierenden Oberfläche auch bei grösseren Unebenheiten auszeichnet.

Die Aufgabe wird durch die Gesamtheit der Merkmale des Anspruchs 1 gelöst. Wesentlich für die erfindungsgemässe Lösung ist, dass die Raupenkette in dem Bereich, wo sie auf der Unterlage aufliegt, über innenliegende, federnd gelagerte Laufräder geführt ist, und dass die magnetischen Mittel in die Laufräder integriert sind.

Insbesondere umfasst die Antriebseinheit eine Tragstruktur, an der die Laufräder federnd gelagert sind.

Eine Ausgestaltung der Erfindung zeichnet sich dadurch aus, dass die Laufräder jeweils eine Radachse aufweisen und dass die magnetischen Mittel zwei in axialer Richtung voneinander beabstandete, konzentrisch zur Radachse angeordnete Magnetringe umfassen, wobei die Magnetringe vorzugsweise als Permanentmagnete ausgebildet sind.

Gemäss einer anderen Ausgestaltung werden die Magnetringe durch einen dazwischen angeordneten Innenring auf Abstand gehalten, auf der Innenseite der Raupenkette eine in Längsrichtung verlaufende, zentrale und erhabene Radführung vorgesehen ist, und die Magnetringe mit dem dazwischen liegenden Innenring eine umlaufende Nut bilden, welche in Breite und Tiefe auf die Radführung abgestimmt ist.

Die Magnetringe können sich dabei gegenseitig abstossen, wobei der Innenring aus einem unmagnetischen Material besteht.

Die Magnetringe können sich aber auch gegenseitig anziehen, wobei der Innenring aus einem unmagnetischen Material besteht oder ebenfalls als Magnetring ausgebildet ist.

Für die magnetische Wirkung der Laufräder ist es in allen Fällen von Vorteil, wenn an die Magnetringe aussen jeweils ferromagnetische Aussenringe angrenzen.

Vorzugsweise sind die einzelnen Ringe des Laufrades auf einem gemeinsamen Tragring angeordnet.

Die Raupenkette ist dabei eine Gummikette oder eine vergleichbare flexible Kette.

Ein erfindungsgemässes Inspektionsfahrzeug mit wenigstens zwei parallel angeordneten, voneinander beabstandeten Antriebseinheiten, zwischen denen eine Sensorplattform angeordnet ist, zeichnet sich dadurch aus, dass als Antriebseinheiten zwei Antriebseinheiten nach einem der Ansprüche 1 bis 12 verwendet werden.

Eine Ausgestaltung des Inspektionsfahrzeugs nach der Erfindung ist dadurch gekennzeichnet, dass zum Einsetzen des Fahrzeugs auf Unterlagen mit Zylindermantel-förmiger Oberfläche wechselnden Durchmessers die Antriebseinheiten und die zentrale Sensorplattform durch Schwenkgelenke miteinander verbunden sind.

Eine Ausgestaltung des Inspektionsfahrzeugs nach der Erfindung ist dadurch gekennzeichnet, dass zum Einsetzen des Fahrzeugs auf Unterlagen mit Zylindermantel-förmiger Oberfläche festen Durchmessers die Antriebseinheiten und die zentrale Sensorplattform über entsprechende Rohrbögen miteinander verbunden sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer vereinfachten Seitenansicht eine Antriebseinheit gemäss einem bevorzugten Ausführungsbeispiel der Erfindung;
- Fig. 2: das Ausführungsbeispiel der Fig. 1 in einer perspektivischen Seitenansicht;
- Fig. 3: in drei Teilfiguren drei im Bezug auf die magnetische Struktur unterschiedliche Varianten für den inneren Aufbau der Laufräder der Antriebseinheit aus Fig. 1;
- Fig. 4: den Schnitt durch ein Laufrad gemäss Fig. 3;
- Fig. 5: den Einsatz eines Inspektionsfahrzeugs gemäss einem Ausführungsbeispiel der Erfindung auf der inneren Oberfläche eines Generator-Stators, wobei das Fahrzeug durch Schwenkgelenke an unterschiedliche Innenradien anpassbar ist und
- Fig. 6: eine photographische Darstellung eines anderen Ausführungsbeispiels eines Inspektionsfahrzeugs nach der Erfindung für einen festen Innenradius.

### WEGE ZUR AUSFÜHRUNG DER ERFINDUNG

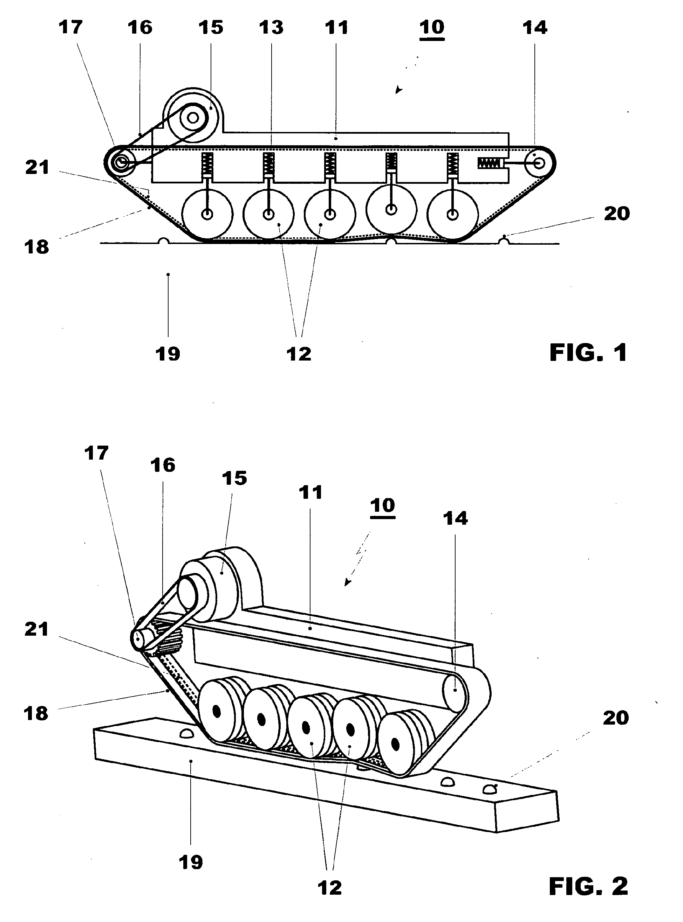

In Fig. 1 ist in einer vereinfachten Darstellung in Seitenansicht eine Antriebseinheit gemäss einem bevorzugten Ausführungsbeispiel der Erfindung wiedergegeben. Die Antriebseinheit 10 umfasst eine Tragstruktur 11, an deren Unterseite eine Mehrzahl von (im Beispiel 5) Laufrädern 12 mittels einzelner Federungen 13 federnd gelagert sind. Die Laufräder 12 laufen auf einer einzelnen geschlossenen, flexiblen Raupenkette 18, die als (magnetisch durchlässige) Gummikette oder Kunststoffkette ausgebildet sein kann. Die Raupenkette 18 ist am einen Ende der Antriebseinheit 10 über eine Umlenkrolle 14 geführt, die von einer Federung beaufschlagt ist und als Kettenspanner dient. Am anderen Ende der Antriebseinheit 10 ist die Raupenkette 18 über eine Antriebsrolle 17 geführt, die über einen Antriebsriemen 16 von einem auf der Oberseite der Tragstruktur 11 angeordneten Antriebsmotor 15 angetrieben wird.

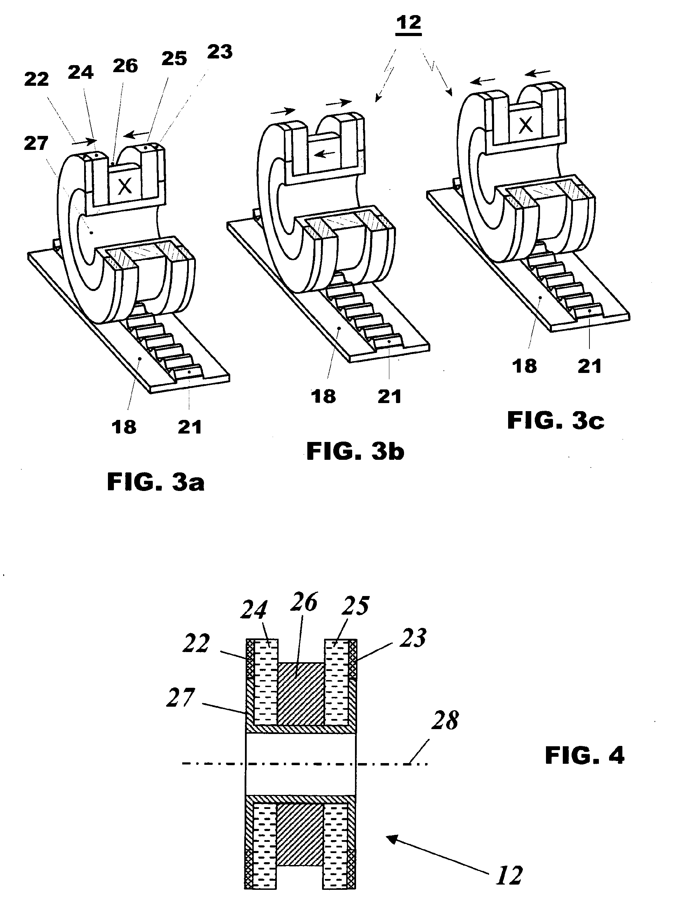

Die Antriebskette 18 ist auf der Innenseite mit einer in der Kettenmitte angeordneten Radführung 21 in Form eines erhabenen Zahnriemenstreifens versehen (siehe auch Fig. 3), die in die umlaufende Nut an den Laufrädern 12 eintaucht. Die Antriebsrolle 17 ist als Zahnrad ausgebildet, das mit dem Zahnriemen der Radführung 21 kämmt.

Durch die Federung der Laufrollen 12 wird erreicht, dass sich die Raupenkette 18 optimal an lokale Unebenheiten 20 anpassen kann, die auf der im Zuge einer Inspektion abzufahrenden Unterlage 19 vorhanden sind. Gleichzeitig wird durch eine Integration von magnetisch wirkenden Haftmitteln in die Laufräder 12 sichergestellt, dass trotz allfälliger Unebenheiten 20 die Haftung der Antriebseinheit auf bzw. an der Unterlage 19, z.B. einer Kesselwand oder einem Generator-Stator oder dgl., optimal erhalten bleibt.

Die Integration der magnetischen Haftmittel in die Laufräder 12 kann gemäss Fig. 3 und 4 auf unterschiedliche Weise erfolgen. Allen in Fig. 3a bis 3c dargestellten Varianten ist gemeinsam, dass die umlaufende Nut zur Aufnahme der Radführung 21 durch zwei voneinander beabstandete, gleichartige Magnetringe 24, 25 gebildet wird, zwischen denen ein im Aussendurchmesser reduzierter Innenring 26 angeordnet ist. Die drei zur Radachse 28 konzentrischen Ringe 24,..,26 sind auf einem zentralen Tragring 27 befestigt, der die Nabe des Laufrades aufnimmt. Aussen grenzen die Magnetringe 24, 25 jeweils an ferromagnetische Aussenringe 22, 23 an, die ebenfalls auf den Tragring 27 sitzen.

Die Magnetringe 24, 25 sind vorzugsweise als Permanentmagnete ausgebildet. In einer Variante (Fig. 3a) sind die Magnetringe 24, 25 so gepolt, dass sie sich gegenseitig abstossen (symbolisiert durch entgegengesetzte Feldrichtungspfeile in Fig. 3a). Der Innenring 26 besteht in diesem Fall aus einem unmagnetischen Material, z.B. Aluminium (symbolisiert durch das "x" in Fig. 3a).

In den beiden anderen Varianten der Fig. 3b und 3c ziehen sich die Magnetringe 24, 25 gegenseitig an (symbolisiert durch gleichgerichtete Feldrichtungspfeile). Der Innenring 26 kann dabei entweder aus einem unmagnetischen Material wie Aluminium bestehen (Fig. 3c), oder ebenfalls als Magnetring ausgebildet sein (Fig. 3b).

In allen Fällen sorgt die Integration der magnetischen Mittel in die Laufräder 12 dafür, dass auch bei Unebenheiten 20 in der (üblicherweise ferromagnetischen) Unterlage 19 die Anziehungskräfte verteilt und immer genügend gross sind, um ein Abhaben oder Abfallen der Antriebseinheit 10 von der Unterlage 19 sicher zu verhindern.

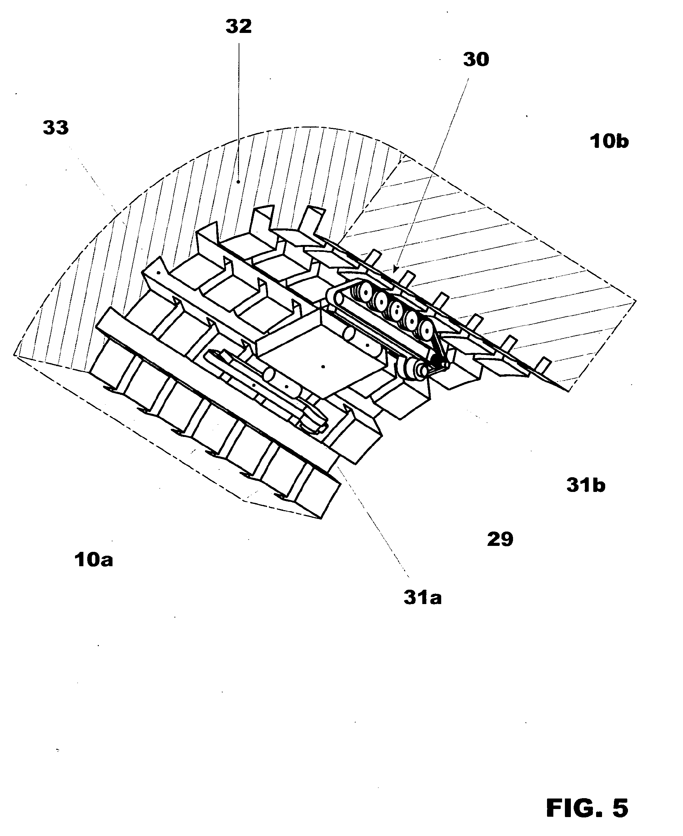

Um nun beispielsweise die zylindrische Innenwand eines Generator-Stators in einer Richtung entlang der Maschinenachse abzufahren, werden gemäss Fig. 5 zwei der in Fig. 1 und 2 gezeigten Antriebseinheiten 10a, 10b mit einer dazwischen angeordneten Sensorplattform 29 zu einem Inspektionsfahrzeug kombiniert, dass sich mit magnetischer Kraft an der Innenwand des Stators 32 festhaltend in axialer Richtung an der Innenwand entlangfährt und die Eigenschaften des Stators 32 überprüft. Die Antriebseinheiten 10a, 10b laufen dabei auf den zwischen den Nuten 33 liegenden Abschnitten der Innenwand. Wenn die beiden aussen liegenden Antriebseinheiten 10a, 10b und die innen liegende Sensorplattform 29 mit den darauf montierten Überprüfungseinrichtungen durch um axiale Schwenkachsen verschwenkbare Schwenkgelenke 31 a und 31 b verbunden sind, kann das Inspektionsfahrzeug 30 an unterschiedlich stark gekrümmte Flächen angepasst werden. Selbstverständlich ist auch das Abfahren ebener Flächen möglich.

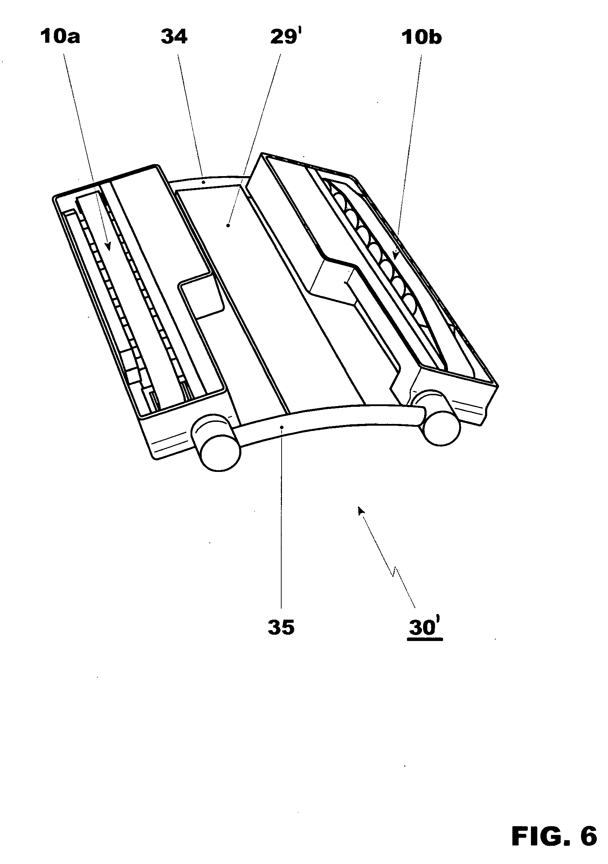

Es ist aber auch denkbar, mit einer vereinfachten Konstruktion das Inspektionsfahrzeug für feste Krümmungen bzw. Radien auszulegen. Ein solches Ausführungsbeispiel zeigt die photographische Aufnahme der Fig. 6. Beim dortigen Inspektionsfahrzeug 30' sind zwei Antriebseinheiten 10a, 10b der in Fig. 1 schematisch gezeigten Art mittels zweier an den Enden des Fahrzeugs angeordneter Rohrbögen 34, 35 mit der dazwischen angeordneten Sensorplattform 29' lösbar verbunden. Die Rohrbögen 34, 35 geben dabei einen festen Radius der zu überprüfenden Oberfläche bzw. Unterlage vor, können aber leicht gegen Rohrbögen mit anderer Krümmung ausgetauscht werden. Der motorische Antrieb erfolgt über axial angeordnete Motoren über KegelradGetriebe.

Das Inspektionsfahrzeug 30' gemäss Fig. 6 kann eingesetzt werden, um Inspektionen und Messungen an einem Generator-Stator vorzunehmen, wenn der Rotor entfernt ist. Dabei können insbesondere Unebenheiten in der abzufahrenden Oberfläche leicht und ohne Nachteil überfahren werden. Es können aber auch andere Bauteile inspiziert werden, wie z.B. Rotorkeile von Generatoren oder andere grosse ferromagnetische Strukturen in einem Kraftwerk.

Das erfindungsgemässe Fahrzeug ist optimal für schnelle Inspektionen und Messungen, kann leicht an unterschiedliche geometrische Gegebenheiten angepasst werden und lässt sich leicht und ohne zusätzliches Werkzeug zusammenbauen. Das geringe Gewicht und die hohe mechanische Stabilität machen es besonders geeignet für Ausseneinsätze in allen Teilen der Welt.

### BEZUGSZEICHENLISTE

- 10, 10a,b: Antriebseinheit
- 11: Tragstruktur
- 12: Laufrad (magnetisch)
- 13: Federung
- 14: Umlenkrolle (Kettenspanner)
- 15: Antriebsmotor
- 16: Antriebsriemen
- 17: Antriebsrolle
- 18: Raupenkette (Gummikette)
- 19: Unterlage
- 20: Unebenheit
- 21: Radführung
- 22,23: Aussenring (ferromagnetisch)
- 24,25: Magnetring (Permanentmagnet)
- 26: Innenring
- 27: Tragring
- 28: Radachse (Laufrad)
- 29,29': Sensorplattform
- 30,30': Inspektionsfahrzeug
- 31 a,b: Schwenkgelenk
- 32: Stator
- 33: Nut
- 34,35: Rohrbogen

## Patentansprüche

1. Antriebseinheit (10, 10a,b) für ein auf ferromagnetischen Unterlagen (19), insbesondere in Generatoren, einsetzbares Inspektionsfahrzeug (30, 30'), welche Antriebseinheit (10, 10a,b) eine motorisch angetriebene Raupenkette (18) sowie magnetische Mittel (22,..,26) zum Halten der Antriebseinheit (10, 10a,b) auf der Unterlage (19) umfasst, **dadurch gekennzeichnet, dass** die Raupenkette (18) in dem Bereich, wo sie auf der Unterlage (19) aufliegt, über innenliegende, federnd gelagerte Laufräder (12) geführt ist, und dass die magnetischen Mittel (22,..,26) in die Laufräder (12) integriert sind.

2. Antriebseinheit nach Anspruch 1, **dadurch gekennzeichnet, dass** die Antriebseinheit (10, 10a,b) eine Tragstruktur (11) umfasst, an der die Laufräder (12) federnd gelagert sind.

3. Antriebseinheit nach Anspruch 1 oder 2, **dadurch gekennzeichnet, dass** die Laufräder (12) jeweils eine Radachse (28) aufweisen und dass die magnetischen Mittel zwei in axialer Richtung voneinander beabstandete, konzentrisch zur Radachse (28) angeordnete Magnetringe (24, 25) umfassen.

4. Antriebseinheit nach Anspruch 3, **dadurch gekennzeichnet, dass** die Magnetringe (24, 25) als Permanentmagnete ausgebildet sind.

5. Antriebseinheit nach Anspruch 3 oder 4, **dadurch gekennzeichnet, dass** die Magnetringe (24, 25) durch einen dazwischen angeordneten Innenring (26) auf Abstand gehalten werden.

6. Antriebseinheit nach Anspruch 5, **dadurch gekennzeichnet, dass** auf der Innenseite der Raupenkette (18) eine in Längsrichtung verlaufende, zentrale und erhabene Radführung (21) vorgesehen ist, und die Magnetringe (24, 25) mit dem dazwischen liegenden Innenring (26) eine umlaufende Nut bilden, welche in Breite und Tiefe auf die Radführung (21) abgestimmt ist.

7. Antriebseinheit nach Anspruch 3, **dadurch gekennzeichnet, dass** die Magnetringe (24, 25) sich gegenseitig abstossen, und dass der Innenring (26) aus einem unmagnetischen Material besteht.

8. Antriebseinheit nach Anspruch 3, **dadurch gekennzeichnet, dass** die Magnetringe (24, 25) sich gegenseitig anziehen, und dass der Innenring (26) aus einem unmagnetischen Material besteht.

9. Antriebseinheit nach Anspruch 3, **dadurch gekennzeichnet, dass** die Magnetringe (24, 25) sich gegenseitig anziehen, und dass der Innenring (26) ebenfalls als Magnetring ausgebildet ist.

10. Antriebseinheit nach Anspruch 3, **dadurch gekennzeichnet, dass** an die Magnetringe (24, 25) aussen jeweils ferromagnetische Aussenringe (22, 23) angrenzen.

11. Antriebseinheit nach einem der Ansprüche 3 bis 10, **dadurch gekennzeichnet, dass** die einzelnen Ringe (22,..,26) auf einem gemeinsamen Tragring (27) angeordnet sind.

12. Antriebseinheit nach einem der Ansprüche 1 bis 11, **dadurch gekennzeichnet, dass** die Raupenkette eine Gummikette (18) oder eine vergleichbare flexible Kette ist.

13. Inspektionsfahrzeug (30, 30') mit wenigstens zwei parallel angeordneten, voneinander beabstandeten Antriebseinheiten (10a,b), zwischen denen eine Sensorplattform (29, 29') angeordnet ist, **dadurch gekennzeichnet, dass** als Antriebseinheiten zwei Antriebseinheiten (10a,b) nach einem der Ansprüche 1 bis 12 verwendet werden.

14. Inspektionsfahrzeug nach Anspruch 13, **dadurch gekennzeichnet, dass** zum Einsetzen des Fahrzeugs auf Unterlagen (19) mit Zylindermantel-förmiger Oberfläche wechselnden Durchmessers die Antriebseinheiten (10a,b) und die zentrale Sensorplattform (29) durch Schwenkgelenke (31 a,b) miteinander verbunden sind.

15. Inspektionsfahrzeug nach Anspruch 13, **dadurch gekennzeichnet, dass** zum Einsetzen des Fahrzeugs auf Unterlagen (19) mit Zylindermantel-förmiger Oberfläche festen Durchmessers die Antriebseinheiten (10a,b) und die zentrale Sensorplattform (29) über entsprechende Rohrbögen (34, 35) miteinander verbunden sind.

## Claims

1. Drive unit (10, 10a,b) for an inspection vehicle (30, 30') which can be used on ferromagnetic bases (19), especially in generators, which drive unit (10, 10a,b) comprises a motor-powered crawler track (18) and also magnetic means (22,..,26) for holding the drive unit (10, 10a,b) on the base (19), **characterized in that** the crawler track (18), in the region where it bears upon the base (19), is guided via inner, spring-mounted running wheels (12), and **in that** the magnetic means (22,..,26) are integrated in the running wheels (12).

2. Drive unit according to Claim 1, **characterized in that** the drive unit (10, 10a,b) comprises a support structure (11) upon which the running wheels (12) are spring-mounted.

3. Drive unit according to Claim 1 or 2, **characterized in that** the running wheels (12) have a wheel axis (28) in each case, and **in that** the magnetic means comprise two magnetic rings (24, 25) which are spaced apart from one another in the axial direction and arranged concentrically to the wheel axis (28).

4. Drive unit according to Claim 3, **characterized in that** the magnetic rings (24, 25) are formed as permanent magnets.

5. Drive unit according to Claim 3 or 4, **characterized in that** the magnetic rings (24, 25) are held a distance apart by means of an inner ring (26) which is arranged between them.

6. Drive unit according to Claim 5, **characterized in that** a central and raised wheel guide (21), which extends in the longitudinal direction, is provided on the inner side of the crawler track (18), and the magnetic rings (24, 25) with the inner ring (26), which lies between them, form an encompassing groove which in width and depth is matched to the wheel guide (21).

7. Drive unit according to Claim 3, **characterized in that** the magnetic rings (24, 25) mutually repel, and **in that** the inner ring (26) consists of a non-magnetic material.

8. Drive unit according to Claim 3, **characterized in that** the magnetic rings (24, 25) mutually attract, and **in that** the inner ring (26) consists of a non-magnetic material.

9. Drive unit according to Claim 3, **characterized in that** the magnetic rings (24, 25) mutually attract, and **in that** the inner ring (26) is also formed as a magnetic ring.

10. Drive unit according to Claim 3, **characterized in that** ferromagnetic outer rings (22, 23) abut in each case against the magnetic rings (24, 25) on the outside.

11. Drive unit according to one of Claims 3 to 10, **characterized in that** the individual rings (22,..,26) are arranged on a common support ring (27).

12. Drive unit according to one of Claims 1 to 11, **characterized in that** the crawler track is a rubber track (18) or a comparable flexible track.

13. Inspection vehicle (30, 30') with at least two drive units (10a,b) which are arranged in parallel and spaced apart from one another, between which a sensor platform (29, 29') is arranged, **characterized in that** two drive units (10a,b) according to one of Claims 1 to 12 are used as drive units.

14. Inspection vehicle according to Claim 13, **characterized in that** for using the vehicle on bases (19) with a cylinder shell-shaped surface of varying diameter, the drive units (10a,b) and the central sensor platform (29) are interconnected by means of swivel joints (31a,b).

15. Inspection vehicle according to Claim 13, **characterized in that** for using the vehicle on bases (19) with a cylinder shell-shaped surface of fixed diameter, the drive units (10a,b) and the central sensor platform (29) are interconnected via corresponding tube bends (34, 35).

## Revendications

1. Unité d'entraînement (10, 10a,b) pour un véhicule d'inspection (30, 30') pouvant être utilisé sur des subjectiles ferromagnétiques (19), notamment dans des générateurs, laquelle unité d'entraînement (10, 10a,b) comprend une chenille (18) entraînée par un moteur ainsi que des moyens magnétiques (22, ..., 26) pour retenir l'unité d'entraînement (10, 10a,b) sur le subjectile (19), **caractérisée en ce que** la chenille (18) est guidée par le biais de roues mobiles (12) montées à ressort et situées à l'intérieur, dans la région où elle repose sur le subjectile (19), et **en ce que** les moyens magnétiques (22, ..., 26) sont intégrés dans les roues mobiles (12).

2. Unité d'entraînement selon la revendication 1, **caractérisée en ce que** l'unité d'entraînement (10, 10a,b) comprend une structure porteuse (11) sur laquelle sont montées à ressort les roues mobiles (12).

3. Unité d'entraînement selon la revendication 1 ou 2, **caractérisée en ce que** les roues mobiles (12) présentent chacune un essieu de roue (28) et **en ce que** les moyens magnétiques comprennent deux bagues magnétiques (24, 25) espacées l'une de l'autre dans la direction axiale, disposées concentriquement à l'axe de roue (28).

4. Unité d'entraînement selon la revendication 3, **caractérisée en ce que** les bagues magnétiques (24, 25) sont réalisées sous forme d'aimants permanents.

5. Unité d'entraînement selon la revendication 3 ou 4, **caractérisée en ce que** les bagues magnétiques (24, 25) sont maintenues à distance par une bague interne (26) disposée entre elles.

6. Unité d'entraînement selon la revendication 5, **caractérisée en ce que** sur le côté intérieur de la chenille (18) est prévu un guide de roue (21) central et rehaussé s'étendant dans la direction longitudinale, et **en ce que** les bagues magnétiques (24, 25) forment avec la bague interne (26) située entre elles une rainure périphérique qui est ajustée en largeur et en profondeur au guide de roue (21).

7. Unité d'entraînement selon la revendication 3, **caractérisée en ce que** les bagues magnétiques (24, 25) se repoussent mutuellement et **en ce que** la bague interne (26) se compose d'un matériau non magnétique.

8. Unité d'entraînement selon la revendication 3, **caractérisée en ce que** les bagues magnétiques (24, 25) s'attirent mutuellement, et **en ce que** la bague interne (26) se compose d'un matériau non magnétique.

9. Unité d'entraînement selon la revendication 3, **caractérisée en ce que** les bagues magnétiques (24, 25) s'attirent mutuellement, et **en ce que** la bague interne (26) est également réalisée sous forme de bague magnétique.

10. Unité d'entraînement selon la revendication 3, **caractérisée en ce que** les bagues magnétiques (24, 25) sont adjacentes à l'extérieur à chaque fois à des bagues extérieures ferromagnétiques (22, 23).

11. Unité d'entraînement selon l'une quelconque des revendications 3 à 10, **caractérisée en ce que** les bagues individuelles (22, ..., 26) sont disposées sur une bague porteuse commune (27).

12. Unité d'entraînement selon l'une quelconque des revendications 1 à 11, **caractérisée en ce que** la chenille est une chaîne en caoutchouc (18) ou une chaîne flexible comparable.

13. Véhicule d'inspection (30, 30') comprenant au moins deux unités d'entraînement parallèles, espacées l'une de l'autre (10a,b) entre lesquelles est disposée une plate-forme de capteur (29, 29'), **caractérisé en ce que** l'on utilise comme unités d'entraînement deux unités d'entraînement (10a,b) selon l'une quelconque des revendications 1 à 12.

14. Véhicule d'inspection selon la revendication 13, **caractérisé en ce que** pour l'utilisation du véhicule sur des subjectiles (19) avec une surface en forme d'enveloppe cylindrique de diamètre variable, les unités d'entraînement (10a,b) et la plate-forme de capteur centrale (29) sont connectées l'une à l'autre par des articulations pivotantes (31a,b).

15. Véhicule d'inspection selon la revendication 13, **caractérisé en ce que** pour l'utilisation du véhicule sur des subjectiles (19) avec une surface en forme d'enveloppe cylindrique de diamètre fixé, les unités d'entraînement (10a,b) et la plate-forme de capteur centrale (29) sont connectées l'une à l'autre par des tubes courbés correspondants (34, 35).
